# EUROPEAN PATENT SPECIFICATION

(11) **EP 3 321 110 B1**
(45) Date of publication and mention of the grant of the patent: **06.03.2019**
(21) Application number: 17207242.3
(22) Date of filing: 15.05.2013
(51) Int. Cl.: B60C 23/00

(54) **A SYSTEM FOR CHANGING TYRE PRESSURE**
SYSTEM ZUR ÄNDERUNG DES REIFENDRUCKS
SYSTÈME DE CHANGEMENT DE PRESSION DE PNEU

(43) Date of publication of application: 16.05.2018
(62) Divisional of application: 13167887.2
(73) Proprietor: Meritor Technology, LLC, Troy, MI 48084 (US)
(72) Inventor: TIZIANI, Eugenio, 28062 Cameri (Novara) (IT); BIONAZ, Davide, 28062 Cameri (Novara) (IT); BASSI, Maro, 28062 Cameri (Novara) (IT); GIANONE, Roberto, 28062 Cameri (Novara) (IT)
(74) Representative: Jones, John Bryn

(56) References cited:
- DE-A1- 4 017 788
- DE-A1- 10 031 596
- FR-A1- 2 506 424
- FR-A1- 2 895 470
- US-A- 4 705 090
- US-A- 4 892 128

## Description

The present invention relates to a system suitable for changing a pressure in a tyre, for example a system for inflating a tyre and/or a system for deflating a tyre.

The tyre inflation systems are known whereby air may be supplied to a rotating pneumatic tyre via a rotating air passage which is permanently coupled to a non-rotating air passage. In order to ensure there is no leakage of pressurised air at the interface between the rotating and non-rotating passages, an appropriate contact seal (typically a lip seal) must be provided. However, whenever the vehicle is moving, the lip seal is in permanent rotating rubbing contact with an adjacent component. This permanent rubbing contact causes friction which in turn results in power loss.

US4,705,080A discloses a vehicle wheel system comprising a hub having an internal flow passageway. US4,892,128A discloses a vehicle seal assembly for controlling tyre pressure. FR2506424(A1) shows a wheel vehicle arrangement for transferring fluid to a rotating hub. FR2895470(A1) discloses a bearing assembly for establishing a flow passageway between a fixed and a rotating channel.

An object of the present invention is to provide a system suitable for changing pressure in a tyre whereby power losses can be reduced.

Thus according to the present invention there is provided a system for changing a pressure in a tyre, the system including a first component having a first fluid passage and a first sealing surface arrangement, and a second component having a second fluid passage and a second sealing surface arrangement, the second component being rotatable relative to the first component and, in use, being rotatably fast with a wheel, the first sealing surface arrangement being selectively engageable with the second sealing surface arrangement to fluidly connect the first fluid passage to the second fluid passage, the first sealing surface arrangement being selectively disengageable from the second sealing surface arrangement.

The first and second components may be moved at least axially relative to each other to selectively engage and disengage the first and second sealing surface arrangements.

The first component may move at least axially.

The first component may move axially and rotatably.

The first component may be non-rotatable.

The first sealing surface arrangement may include a first outer sealing surface spaced radially outwardly from a first inner sealing surface and the second sealing surface arrangement may include a second outer sealing surface spaced radially outwardly from a second inner sealing surface
and the first outer sealing surface may be engageable with the second outer sealing surface and the first inner sealing surface may be engageable with the second inner sealing surface to selectively engage the first sealing surface arrangement with the second sealing surface arrangement.

One or more of the first outer, second outer, first inner and second inner sealing surfaces may be defined by a flat surface.

The first and second outer sealing surfaces may be selectively engageable with each other at a first axial location and the first and second inner sealing surfaces may be selectively engageable with each other at a second axial location.

The second component may be rotatably mounted on a rotating element bearing having an outer race and the first inner sealing surface and second inner sealing surface may be positioned radially inwardly of an outer diameter of the outer race.

The second passage may include a radially orientated portion between the second outer sealing surface and second inner sealing surface.

The first component may include a body including the first fluid passage and the first sealing surface arrangement may include a portion being provided on a first sealing element resiliently mounted relative to the body.

A further portion of the first sealing surface arrangement may be provided on a second sealing element separately resiliently mounted relative to the body.

The first sealing element and/or the second sealing element may be resiliently mounted relative to the body via an associated o-ring.

The second sealing surface arrangement may include a portion being provided on a first sealing element resiliently mounted relative to the second component.

A further portion of the second sealing surface arrangement may be provided on a second sealing element separately resiliently mounted relative to the second component.

The second component may be a wheel hub.

The system may include an actuator to selectively engage the first and second sealing surface arrangements.

The actuator may be an electric actuator or an air operated actuator.

According to a further aspect of the present invention there is provided a method of changing a pressure in a tyre including
providing a vehicle with a tyre,
providing a system as defined in any preceding claim on the vehicle,
operably connecting the second passage to the tyre,
engaging the first sealing surface arrangement with the second sealing surface arrangement, changing a pressure in the first passage so as to change a pressure in the tyre.

The step of operably connecting the second passage to the tyre may include the step of fluidly connecting the second passage to the tyre. Advantageously such an arrangement allows for inflating of the tyre.

The step of operably connecting the second passage to the tyre may include fluidly connecting the second passage to a valve and fluidly connecting the valve to the tyre. Advantageously such an arrangement allows for deflation of the tyre.

The pressure in the tyre may be changed whilst the tyre is rotating.

The invention will now be described, by way of example only, with reference to the accompanying drawings in which:
Figure 1 is an isometric exploded view of a system according to the present invention,
Figure 2 is a cross-section view of one of the components of figure 1,
Figure 3 is a cross-section view of one of the components of figure 1,
Figure 4 is an axial view of figure 3,
Figure 5 is a cross-sectional view of the system of figure 1 shown in a disengaged position,
Figure 5A is an enlarged view of part of figure 5,
Figure 6 is a cross-sectional view of the system of figure 1 shown in an engaged position, and
Figure 6A is an enlarged view of part of figure 6.

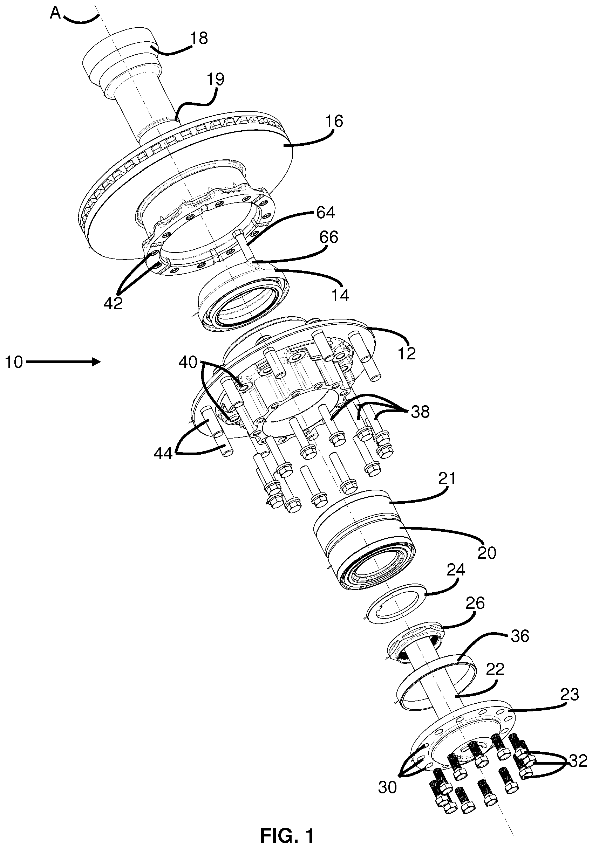

With reference to the figures there is shown a tyre inflation/deflation system 10. The tyre inflation/deflation system 10 includes a wheel hub 12 and a device 14. Figure 1 also shows a brake disc 16, an axle end 18, a hub bearing 20, and a drive shaft 22 (only part of which is shown).

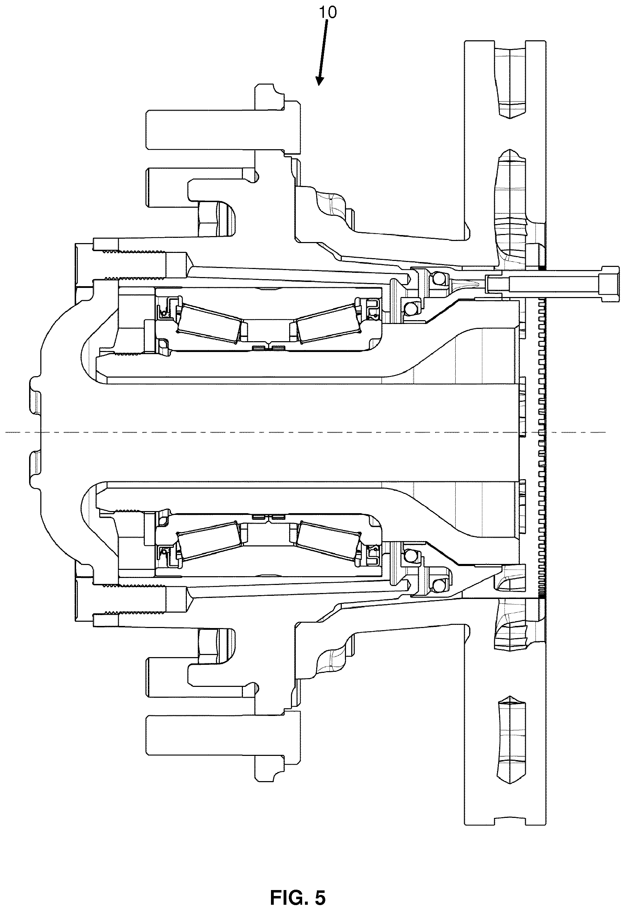

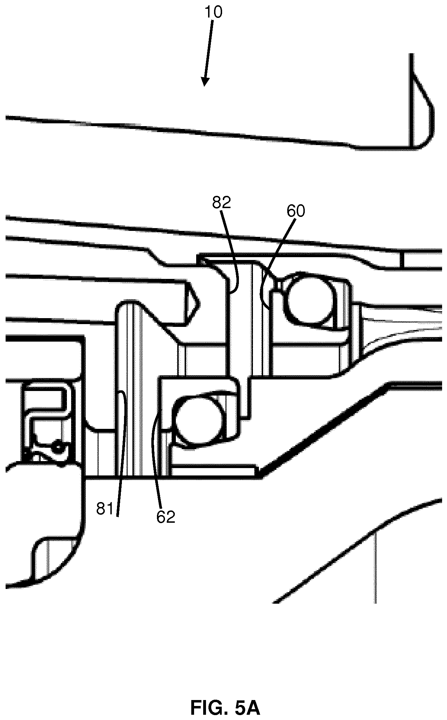

The hub bearing is mounted on the axle end 18 as can be best seen in figure 5 and secured in place by washer 24 and nut 26. Nut 26 is threaded onto thread 19 of axle end 18. Nut 26 may be staked or otherwise secured in place.

The wheel hub 12 is mounted on the outer race 21 of the hub bearing 20. A flanged end 23 of the drive shaft 22 includes an array of holes 30 through which bolts 32 pass and are screwed into threaded holes 34 of the wheel hub 12. A spacer 36 is positioned between the flanged end 23 and the outer race 21. Accordingly the wheel hub 12 can rotate about axis A but is prevented from moving axially along axis A. An array of bolts 38 pass through holes 40 in the wheel hub 12 and engage in threaded holes 42 of the brake disc 16. The bolts 38 therefore secure the brake disc to the wheel hub.

An array of wheel studs 44 are secured in a flange 46 of the wheel hub 12. Two wheels (not shown) and associated pneumatic tyres are secured to the wheel hub in a manner well known in the art.

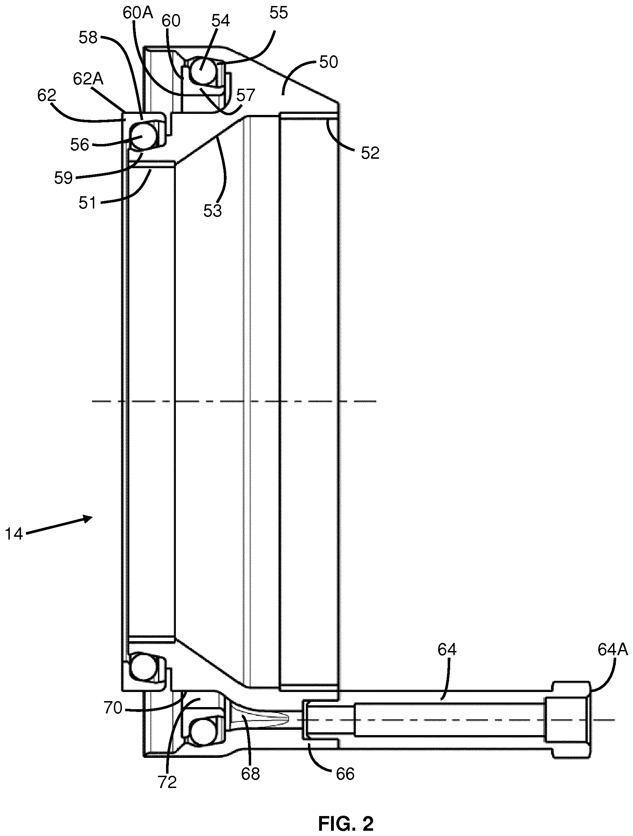

As best seen in figures 1 and 2, the device 14 has a generally annular body 50 having a first cylindrical surface 51 into a second cylindrical surface 52 via connected angled surface 53. An elastomeric o-ring 54 is received in a recess 55 of the body 50 and an elastomeric o-ring 56 is received on a lip 59 of body 50. O-ring 54 supports an annular sealing element 57 which is L-shaped in cross-section and o-ring 56 supports an annular sealing element 58 which is L-shaped in cross-section. Annular sealing element 57 defines a flat sealing surface 60 and annular sealing element 58 defines a flat sealing surface 62. An extension tube 64 is threadingly engaged in boss 66 of the body 50. The tube 64 is hollow. Within boss 66 there is a generally axially orientated hollow section 68. When viewing figure 2, the right hand end of the hollow section 68 is aligned with the hollow part of the extension tube 64. Radially between the annular sealing element 57 and surface 70 of the body 50 there is defined an annular space 72 which is in fluid communication with the hollow section 68 which in turn is in fluid communication with the hollow part of tube 64.

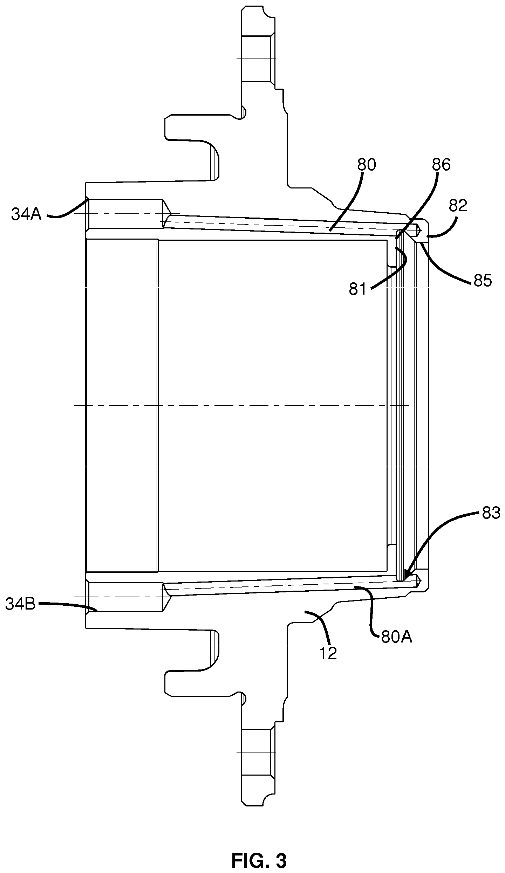

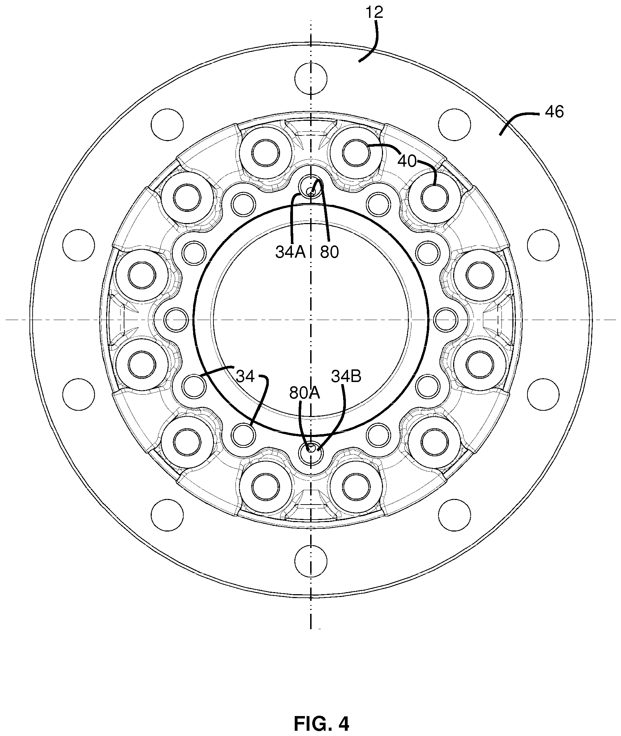

As best seen in figures 3 and 4 the wheel hub 12 includes a drilled hole 80 which extends from the bottom of threaded hole 34A to right hand portion of the hub when viewing figure 3. The hole 80 is generally axially orientated, though the right hand end of hole 80 when viewing figure 3 is radially inwardly of the left hand end. The right hand end of the wheel hub when viewing figure 3 includes sealing surface 81 and sealing surface 82. Both sealing surface 81 and sealing surface 82 are flat. Sealing surface 82 is positioned in a plane to the right of the plane of sealing surface 81 when viewing figure 3. Sealing surface 81 is positioned radially inwardly of sealing surface 82. The hub 12 includes an internal groove 83 which extends around the inner circumference of the wheel hub. As can be seen in figure 3 the top of the groove 83 intercepts with the right hand end of drilled hole 80. Note that the drilled hole 80 does not pass through sealing surface 82, rather drilled hole 80 stops short of sealing surface 82. As will be appreciated, groove 82 therefore is in fluid communication with hole 80.

The hub 12 has a further hole 80A which fluidly connects groove 83 with threaded hole 34B.

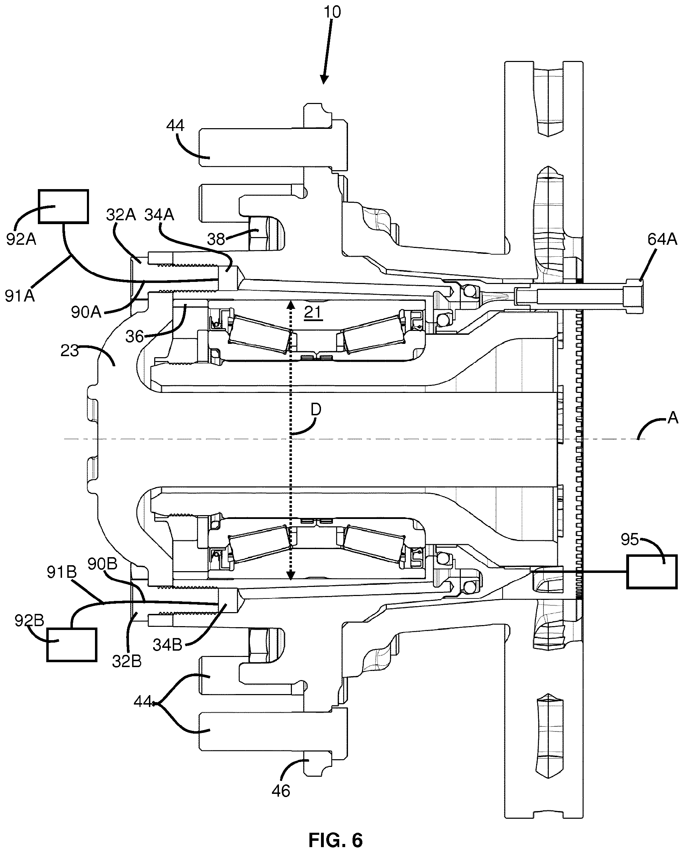

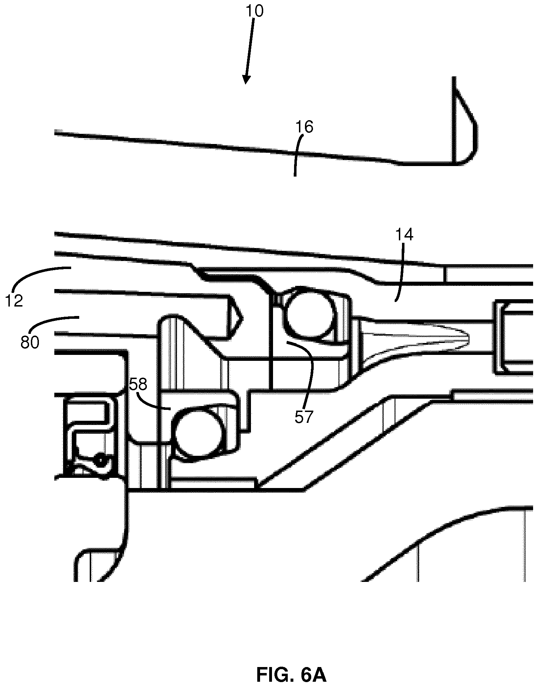

Bolt 32A (see figure 6) has a central drilling 90A (shown schematically) which is connected to an airline 91A (shown schematically) which in turn is connected to a tyre 92A (shown schematically) which is mounted on a first wheel (not shown) which is secured to the hub 12 via wheel studs 44. Similarly bolt 32B has a central drilling 90B (shown schematically) which is connected to a pneumatic line 91B (shown schematically), which in turn is connected to tyre 92B (shown schematically) which tyre is mounted on a second wheel (not shown) which is secured to the hub by wheel studs 44.

In summary, in order to inflate tyres 92A and 92B, the device 14 (also referred to as a first component) is moved to the left, to the position shown in figure 6 to engage the hub (also known as a second component) and pressurised air is supplied to end 64A of the extension tube 64. This pressurised air then passes through the hollow extension tube 64, through hollow section 68, through annular space 72, into groove 83. Once at groove 83 some of the pressurised air will then pass into and along hole 80, into the bottom of threaded hole 34A, through central drilling 90A of bolt 32A, through pneumatic line 91A and into tyre 92A, thereby inflating tyre 92A. Other pressurised air in groove 83 will pass into hole 80A into the bottom of threaded hole 34B, through central drilling 90B of bolt 32B, into pneumatic line 91B and into tyre 92B, thereby inflating tyre 92B.

In more detail, the device 14 can be moved from the disengaged position shown in position 5 to the engaged position shown in figure 6 by an actuator 95 (shown schematically). When the device is in the position shown in figures 6 and 6A, then sealing surface 60 is engaged with sealing surface 82 and sealing surface 62 is engaged with sealing surface 81. The actuator applies a force to body 50 to ensure that sealing surface 60 is pressed against sealing surface 82 and sealing surface 62 is pressed against sealing surface 81. Due to the force of engagement between the sealing surfaces, air does not leak out between the engaged sealing surfaces.

As will be appreciated, the actuator 95 applies the force to the annular sealing elements 57 and 58 via their associated elastomeric o-rings 54 and 56. Accordingly, o-ring 54 is sealed against recess 55 and also against the annular sealing element 57 and o-ring 56 is sealed against lip 59 and also against annular sealing element 58. Accordingly, pressurised air cannot escape past the elastomeric o-rings 54 or 56.

The actuator 95 may be any suitable type of actuator, including an electric actuator or a pneumatically operated actuator.

Once the tyres have been inflated to a desired pressure then the axial force applied by actuator 95 is released thereby allowing the device 14 to disengage from the wheel hub. The first cylindrical surface 51 and second cylindrical surface 52 allow the device 40 to slide leftwardly and rightwardly on the axle end 18 when viewing figures 5 and 6.

As best seen in figure 6, the engaging sealing surfaces 81 and 62 are positioned radially inwardly of an outer diameter D of the outer bearing race 21. Such arrangement is an efficient use of space and provides for a radially compact arrangement. As can be seen from figure 6, the plane of contact of sealing surfaces 60 and 82 is positioned to the right of the plane of contact of sealing surfaces 62 and 81. Furthermore, as the air passes into groove 83 and then into hole 80, it is caused to move radially outwardly. In other words, inner surface 85 (see figure 3) is positioned radially inwardly of the edge 86 between groove 83 and hole 80. This radial movement of the air as it moves towards the tyre allows the outer edge 62A (see figure 2) of sealing surface 62 to be spaced only a relatively small radial distance from the inner edge 60A of sealing surface 60. By ensuring that edges 62A and 60A are spaced apart by a relatively small radial distance means that the force that the actuator 95 has to apply to ensure sealing contact between sealing surfaces 60 and 82 and sealing surfaces 62 and 81 is relatively small, thereby reducing the necessity for a relatively high powered, and therefore expensive actuator 95.

The wheel hub 12 is a driven wheel hub and is driven in a forwards or reverse direction by the drive shaft 22. Drive shaft 22 will be driven from the vehicle's prime mover (such as an internal combustion engine) via a gear box, prop shaft and typically a differential assembly. In further embodiments the tyre inflation/deflation system may be applied to a non-driven wheel. In particular a tyre inflation/deflation system may be applied to a non-driven steered wheel, such as a front wheel.

As described above, two wheels are mounted on the wheel hub 12 with each wheel having an associated tyre. As such, in order to inflate each tyre the hub has hole 80 for inflating tyre 92A and hole 80A for inflating tyre 92B. As will be appreciated, any number of tyres can be inflated, and in particular a single tyre may be mounted on a hub and the hub may include a single passage for providing air to that single tyre from the first component.

Whilst wheel hub 12 has two holes (80 and 80A) for inflating two tyres, in further embodiments the hub could have a single hole which could nevertheless be used to inflate two or more tyres. Thus, for example, hole 80A could be deleted and pneumatic line 91B could be connected by a "T" joint into pneumatic line 91A. Under these circumstances all the air would pass through hole 80 but would nevertheless inflate tyres 92A and 92B.

Many vehicles include a pressurised supply of gas, in particular road vehicles, such as lorries and trucks, have a tank of pressurised air. This pressurised air may be used to apply or release pneumatically operated brakes. Such an air supply can equally be used to inflate pneumatic tyres of the vehicle. However, in further embodiments the vehicle may not have pneumatically operated brakes, and in further embodiments a pressurised supply of air may solely be used to inflate the tyres. Typically an air compressor may be driven by a prime mover of the vehicle in order to store pressurised air in a tank. However, a tank is not necessary and in further embodiments a compressor may be driven from a prime mover only whilst it is required to supply pressurised air to the first component whilst the tyres are inflated.

As shown in figure 6, surface 60 is engaged with surface 82 and surface 62 is engaged with surface 81. As shown in figure 5 surface 60 is spaced axially from surface 82 by a distance and surface 62 is spaced axially from surface 81 by a distance. Actuator 95 is operable to move the device 14 from the figure 5 position to the figure 6 position and is also operable to move the device 14 from the figure 6 position to the figure 5 position. In further embodiments the actuator 95 may only apply a force to the device (the first component) which force is reacted by the engagement between surfaces 60 and 82 and the engagement between surfaces 62 and 81. Such a force prevents leakage of air when the tyres are being inflated. When it is no longer required to inflate the tyres the force being applied by actuator 95 may be released. Under such circumstances there will be no frictional force between surfaces 60 and 80 and surfaces 62 and 81 but nevertheless surface 60 may only be a fraction of a millimetre away from surface 82 and surface 62 may only be a fraction of a millimetre away from surface 81. Even under these circumstances the benefits of the present invention will take effect and the frictional losses between surfaces 60 and 80 and surface 62 and 81 will be minimised or zero. Typically as hub 12 rotates there will be a relatively small amount of "run out" of either surface 82 or surface 81. This run out will only be a small fraction of a millimetre but nevertheless will be enough to "knock back" device 14 so that surface 60 is disengaged from surface 82 and surface 62 is disengaged from surface 81. Accordingly actuator 95 may not be required to actively disengage the first component from the second component, rather actuator 95 may simply be arranged to allow the first and second components to become disengaged.

As described above, surface 60 is resiliently mounted via o-ring 54 relative to the body 50 and surface 62 is resiliently mounted via o-ring 56 relative to the body 50. As will be appreciated, alternative methods of resiliently mounting one or other or both surfaces 62 and 60 relative to body 50 may be used. In further embodiments surface 82 may be resiliently mounted relative to the second component. In further embodiments surface 81 may be resiliently mounted relative to the second component. In further embodiments only one of surfaces 81, 82, 60 and 62 may be resiliently mounted relative to its associated component. In further embodiments one of surfaces 81 and 82 may be resiliently mounted relative to the second component and one of surfaces 60 and 62 may be resiliently mounted relative to the first component.

As described above, surfaces 60, 62, 82 and 81 are all flat. In further embodiments one or more or all of these surfaces need not be flat.

As will be appreciated, it is only necessary to engage the first and second components whilst the tyre is being inflated, and at all other times the first component can be disengaged from the second component. Accordingly, for the vast majority of time, the first and second components will be disengaged and there will be no parasitic friction loss. Surfaces 60, 62, 81 and 82 may be provided in any suitable material, and in particular these surfaces may be coated with lubricant, in particular a dry film lubricant. Examples of suitable dry film lubricants are DuPont Dry Film 2000 and Locktite 8191.

As mentioned above, various holes have been described as drillings. However, any holes or passages mentioned above could be formed by any suitable method and in particular are not limited to being formed by a drilling process.

In the above examples, the tyre or tyres have been inflated using the present invention. However, in further embodiments it is also possible to deflate tyres using the present invention. Thus, US7089953 shows a valve (reference number 1 in US7089953) which can selectively inflate or deflate a tyre. This valve can be used in conjunction with the present invention to selectively inflate or deflate tyres. Thus, in one example, a valve of US7089953 can be inserted in pneumatic line 91A (see figure 6) between the bolt 32A and the tyre 92A. A further valve of US7089953 can be inserted in line 91B between bolt 32B and tyre 92B. These valves can be secured at a suitable location on the vehicle. With such valves in place, in order to inflate the tyres, the device 14 is moved to the left, to the position shown in figure 6 to engage the hub and pressurised air is supplied to end 64A of the extension tube 64. This pressurised air then passes into the tyres 92A and 92B via the respective valves of US7089953.

In order to deflate the tyres the device 14 is moved to the left to the position shown in figure 6 to engage the hub. However, now a vacuum or partial vacuum is applied to end 64A of the extension tube 64. This vacuum or partial vacuum acts on the valves of US7089953 thereby partially deflating tyres 92A and 92B by venting some of the air therein to atmosphere. As will be appreciated, when using the valves of US7089953, then a suitable negative pressure source must be provided, for example a vacuum pump, or a venturi, or any other suitable vacuum source.

## Claims

1. A system (10) for changing a pressure in a tyre (92A, 92B), the system (10) including a first component (14) having a first fluid passage (64) and a first sealing surface arrangement (60, 62), and a second component (12) having a second fluid passage (80, 80A) and a second sealing surface arrangement (81, 82), the second component (12) being rotatable relative to the first component (14) and, in use, being rotatably fast with a wheel, the first sealing surface arrangement (60, 62) being selectively engageable with the second sealing surface arrangement (81, 82) to fluidly connect the first fluid passage (64) to the second fluid passage (80, 80A), the first sealing surface arrangement (60, 62) being selectively disengageable from the second sealing surface arrangement (81, 82);
**characterised in that** the first sealing surface arrangement (60, 62) includes a first outer sealing surface (60) spaced radially outwardly from a first inner sealing surface (62) and the second sealing surface arrangement (81, 82) includes a second outer sealing surface (82) spaced radially outwardly from a second inner sealing surface (81); and
wherein the first outer sealing surface (60) is engageable with the second outer sealing surface (82) at a first axial location and the first inner sealing surface (62) is engageable with the second inner sealing surface (81) at a second axial location to selectively engage the first sealing surface arrangement (60, 62) with the second sealing surface arrangement (81, 82).

2. A system (10) as defined in claim 1 wherein the first (14) and second (12) components are moved at least axially relative to each other to selectively engage and disengage the first (60, 62) and second (81, 82) sealing surface arrangements.

3. A system (10) as defined in claim 2 wherein the first component (14) moves at least axially, alternatively wherein the first component (14) moves axially and rotatably.

4. A system (10) as defined in claim 2 when the first component (14) is non-rotatable.

5. A system (10) as defined in claim 1 wherein one or more of the first outer (60), second outer (82), first inner (62) and second inner (81) sealing surfaces are defined by a flat surface.

6. A system (10) as defined in any one of claims 1 to 5 wherein the second component (12) is rotatably mounted on a rotating element bearing (20) having an outer race (21) and the first inner sealing surface (62) and second inner sealing surface (81) are positioned radially inwardly of an outer diameter of the outer race (21).

7. A system (10) as defined in any one of claims 1 to 6 wherein the second passage includes a radially orientated portion (85) between the second outer sealing surface (81) and second inner sealing surface (82).

8. A system (10) as defined in any preceding claim wherein the first component (14) includes a body (50) including the first fluid passage (64) and the first sealing surface arrangement (60, 62) includes a portion being provided on a first sealing element (57) resiliently mounted relative to the body (50).

9. A system (10) as defined in claim 8 wherein a further portion of the first sealing surface arrangement (60, 62) is provided on a second sealing element (58) separately resiliently mounted relative to the body (50), preferably wherein the first sealing element (57) and/or the second sealing element (58) is/are resiliently mounted relative to the body (50) via an associated o-ring (54, 56).

10. A system (10) as defined in any one of claims 1 to 7 wherein the second sealing surface arrangement (81, 82) includes a portion being provided on a first sealing element resiliently mounted relative to the second component (12), preferably wherein a further portion of the second sealing surface arrangement (81, 82) is provided on a second sealing element separately resiliently mounted relative to the second component (12).

11. A system (10) as defined in any preceding claim wherein the second component (12) is a wheel hub.

## Patentansprüche

1. System (10) zum Verändern eines Drucks in einem Reifen (92A, 92B), wobei das System (10) eine erste Komponente (14) beinhaltet, die einen ersten Fluidkanal (64) und eine erste Dichtflächenanordnung (60, 62) aufweist, und eine zweite Komponente (12), die einen zweiten Fluidkanal (80, 80A) und eine zweite Dichtflächenanordnung (81, 82) aufweist, wobei die zweite Komponente (12) relativ zur ersten Komponente (14) drehbar und im Gebrauch mit einem Rad drehfest ist, wobei die erste Dichtflächenanordnung (60, 62) in die zweite Dichtflächenanordnung (81, 82) selektiv einrückbar ist, um den ersten Fluidkanal (64) mit dem zweiten Fluidkanal (80, 80A) fluidisch zu verbinden, wobei die erste Dichtflächenanordnung (60, 62) selektiv aus der zweiten Dichtflächenanordnung (81, 82) ausrückbar ist;
**dadurch gekennzeichnet, dass** die erste Dichtflächenanordnung (60, 62) eine erste äußere Dichtfläche (60) beinhaltet, die von einer ersten inneren Dichtfläche (62) radial nach außen beabstandet ist, und die zweite Dichtflächenanordnung (81, 82) eine zweite äußere Dichtfläche (82) beinhaltet, die von einer zweiten inneren Dichtfläche (81) radial nach außen beabstandet ist; und
wobei die erste äußere Dichtfläche (60) in einer ersten axialen Position in die zweite äußere Dichtfläche (82) und die erste innere Dichtfläche (62) in einer ersten axialen Position in die zweite innere Dichtfläche (81) einrückbar ist, um die erste Dichtflächenanordnung (60, 62) selektiv in die zweite Dichtflächenanordnung (81, 82) einzurücken.

2. System (10) nach Anspruch 1, wobei die erste (14) und die zweite (12) Komponente mindestens axial relativ zueinander bewegt werden, um selektiv in die erste (60, 62) und die zweite (81, 82) Dichtflächenanordnung einzurücken bzw. daraus auszurücken.

3. System (10) nach Anspruch 2, wobei die erste Komponente (14) sich mindestens axial bewegt, wobei die erste Komponente (14) sich alternativ axial und drehbar bewegt.

4. System (10) nach Anspruch 2, wenn die erste Komponente (14) nicht drehbar ist.

5. System (10) nach Anspruch 1, wobei eine oder mehrere der ersten äußeren (60), der zweiten äußeren (82), der ersten inneren (62) und der zweiten inneren (81) Dichtfläche durch eine ebene Fläche definiert sind.

6. System (10) nach einem der Ansprüche 1 bis 5, wobei die zweite Komponente (12) drehbar an einem Drehelementlager (20) montiert ist, das einen äußeren Laufring (21) aufweist, und die erste innere Dichtfläche (62) und die zweite innere Dichtfläche (81) von einem Außendurchmesser des Laufrings (21) radial nach innen positioniert sind.

7. System (10) nach einem der Ansprüche 1 bis 6, wobei der zweite Kanal zwischen der zweiten äußeren Dichtfläche (81) und der zweiten inneren Dichtfläche (82) einen radial ausgerichteten Abschnitt (85) beinhaltet.

8. System (10) nach einem der vorhergehenden Ansprüche, wobei die erste Komponente (14) einen Körper (50) beinhaltet, der den ersten Fluidkanal (64) beinhaltet, und die erste Dichtflächenanordnung (60, 62) einen Abschnitt beinhaltet, der auf einem ersten Dichtungselement (57) bereitgestellt ist, das relativ zum Körper (50) nachgiebig montiert ist.

9. System (10) nach Anspruch 8, wobei ein weiterer Abschnitt der ersten Dichtflächenanordnung (60, 62) an einem zweiten Dichtungselement (58) bereitgestellt ist, das separat relativ zum Körper (50) nachgiebig montiert ist, wobei vorzugsweise das erste Dichtungselement (57) und/oder das zweite Dichtungselement (58) via einen zugehörigen O-Ring (54, 56) relativ zum Körper (50) nachgiebig montiert ist/sind.

10. System (10) nach einem der Ansprüche 1 bis 7, wobei die zweite Dichtflächenanordnung (81, 82) einen Abschnitt beinhaltet, der an einem ersten Dichtungselement bereitgestellt ist, das relativ zur zweiten Komponente (12) nachgiebig montiert ist, wobei vorzugsweise ein weiterer Abschnitt der zweiten Dichtflächenanordnung (81, 82) auf einem zweiten Dichtungselement bereitgestellt ist, das relativ zur zweiten Komponente (12) nachgiebig montiert ist.

11. System (10) nach einem der vorhergehenden Ansprüche, wobei die zweite Komponente (12) eine Radnabe ist.

## Revendications

1. Système (10) de changement de pression dans un pneu (92A, 92B), le système (10) comprenant un premier composant (14) présentant un premier passage de fluide (64) et un premier agencement de surface d'étanchéité (60, 62), et un second composant (12) présentant un second passage de fluide (80, 80A) et un second agencement de surface d'étanchéité (81, 82), le second composant (12) étant rotatif par rapport au premier composant (14) et, lors de l'utilisation, étant rotativement rapide avec une roue, le premier agencement de surface d'étanchéité (60, 62) pouvant être engagé de façon sélective avec le second agencement de surface d'étanchéité (81, 82) pour connecter fluidiquement le premier passage de fluide (64) au second passage de fluide (80, 80A), le premier agencement de surface d'étanchéité (60, 62) pouvant être désengagé de façon sélective du second agencement de surface d'étanchéité (81, 82);
**caractérisé en ce que** le premier agencement de surface d'étanchéité (60, 62) comprend une première surface d'étanchéité extérieure (60) espacée radialement vers l'extérieur d'une première surface d'étanchéité intérieure (62) et le second agencement de surface d'étanchéité (81, 82) comprend une seconde surface d'étanchéité extérieure (82) espacée radialement vers l'extérieur d'une seconde surface d'étanchéité intérieure (81); et
dans lequel la première surface d'étanchéité extérieure (60) peut être engagée avec la seconde surface d'étanchéité extérieure (82) à une première position axiale, et la première surface d'étanchéité intérieure (62) peut être engagée avec la seconde surface d'étanchéité intérieure (81) à une seconde position axiale afin d'engager de façon sélective le premier agencement de surface d'étanchéité (60, 62) avec le second agencement de surface d'étanchéité (81, 82) .

2. Système (10) selon la revendication 1, dans lequel les premier (14) et second (12) composants sont déplacés au moins axialement l'un par rapport à l'autre afin d'engager et de désengager de façon sélective les premier (60, 62) et second (81, 82) agencements de surface d'étanchéité.

3. Système (10) selon la revendication 2, dans lequel le premier composant (14) se déplace au moins axialement, alternativement dans lequel le premier composant (14) se déplace de façon axiale et rotative.

4. Système (10) selon la revendication 2, dans lequel le premier composant (14) est non-rotatif.

5. Système (10) selon la revendication 1, dans lequel une ou plusieurs surface(s) d'étanchéité parmi la première surface d'étanchéité extérieure (60), la seconde surface d'étanchéité extérieure (82), la première surface d'étanchéité intérieure (62) et la seconde surface d'étanchéité intérieure (81) est (sont) définie(s) par une surface plate.

6. Système (10) selon l'une quelconque des revendications 1 à 5, dans lequel le second composant (12) est monté de façon rotative sur un palier à élément rotatif (20) qui présente une piste extérieure (21), et la première surface d'étanchéité intérieure (62) et la seconde surface d'étanchéité intérieure (81) sont positionnées radialement vers l'intérieur d'un diamètre extérieur de la piste extérieure (21).

7. Système (10) selon l'une quelconque des revendications 1 à 6, dans lequel le second passage comprend une partie orientée radialement (85) entre la seconde surface d'étanchéité extérieure (81) et la seconde surface d'étanchéité intérieure (82).

8. Système (10) selon l'une quelconque des revendications précédentes, dans lequel le premier composant (14) comprend un corps (50) comprenant le premier passage de fluide (64) et le premier agencement de surface d'étanchéité (60, 62) comprend une partie qui est prévue sur un premier élément d'étanchéité (57) monté de façon élastique par rapport au corps (50).

9. Système (10) selon la revendication 8 dans lequel une partie supplémentaire du premier agencement de surface d'étanchéité (60, 62) est prévue sur un second élément d'étanchéité (58) monté séparément de façon élastique par rapport au corps (50), de préférence dans lequel le premier élément d'étanchéité (57) et/ou le second élément d'étanchéité (58) est (sont) monté(s) de façon élastique par rapport au corps (50) par l'intermédiaire d'un joint torique associé (54, 56).

10. Système (10) selon l'une quelconque des revendications 1 à 7, dans lequel le second agencement de surface d'étanchéité (81, 82) comprend une partie qui est prévue sur un premier élément d'étanchéité monté de façon élastique par rapport au second composant (12), de préférence dans lequel une partie supplémentaire du second agencement de surface d'étanchéité (81, 82) est prévue sur un second élément d'étanchéité monté séparément de façon élastique par rapport au second composant (12).

11. Système (10) selon l'une quelconque des revendications précédentes, dans lequel le second composant (12) est un moyeu de roue.
